Europäisches Patentamt

European Patent Office

Office européen des brevets

(19)

(11) EP 0 680 877 B1

(12) **FASCICULE DE BREVET EUROPEEN**

(45) Date de publication et mention
de la délivrance du brevet:
**20.05.1998 Bulletin 1998/21**

(51) Int. Cl.⁶: **B64C 39/12**, B64C 13/16

(21) Numéro de dépôt: **95400907.2**

(22) Date de dépôt: **24.04.1995**

(54) **Avion de transport à empennage avant**

Transportflugzeug mit Vorderhöhenruder

Transport aircraft with forward mounted stabilizer

(84) Etats contractants désignés:
**DE ES GB**

(30) Priorité: **03.05.1994 FR 9405371**

(43) Date de publication de la demande:
**08.11.1995 Bulletin 1995/45**

(73) Titulaire:
**AEROSPATIALE Société Nationale Industrielle
75781 Paris Cédex 16 (FR)**

(72) Inventeurs:
 • **Bilange, Thierry
  F-31170 Tournefeuille (FR)**
 • **Vigneron, Yvon
  F-31770 Colomiers (FR)**

(74) Mandataire: **Bonnetat, Christian
CABINET BONNETAT
29, rue de St. Pétersbourg
75008 Paris (FR)**

(56) Documents cités:
  EP-A- 0 033 053  EP-A- 0 084 686
  EP-A- 0 193 442  FR-A- 2 449 592

**Description**

On sait que les avions de transport usuels comportent une voilure principale assurant la portance et des surfaces aérodynamiques de profondeur, telles que par exemple un empennage stabilisateur horizontal arrière pourvu de gouvernes de profondeur réglables (pour un avion subsonique) ou bien des élevons du bord de fuite de ladite voilure principale (pour un avion supersonique sans empennage horizontal). Dans ces avions de transport connus, l'équilibrage en tangage et la stabilité en vol sont obtenus, pour chaque position du centre de gravité, par le réglage desdites surfaces aérodynamiques de profondeur qui fournissent, selon les cas, une portance ou une déportance suffisantes pour engendrer un moment compensant le moment engendré par la voilure principale.

En ce qui concerne l'équilibrage en tangage proprement dit, la coopération de la voilure principale et des surfaces aérodynamiques de profondeur donne entièrement satisfaction. Cependant, il n'en est pas de même pour les performances aérodynamiques et pour la masse de l'avion.

En effet, les surfaces aérodynamiques de profondeur sont génératrices d'une traînée élevée. De plus, la déportance desdites surfaces aérodynamiques de profondeur doit être compensée en exerçant sur la voilure principale une portance supplémentaire entraînant une augmentation des charges aérodynamiques appliquées à cette voilure principale et donc de la masse de celle-ci.

Bien entendu, ces charges aérodynamiques supplémentaires sont cause à leur tour d'une augmentation de traînée.

Pour remédier à ces inconvénients, c'est-à-dire réduire la traînée et augmenter la portance de l'avion, tout en déchargeant la voilure principale, on a déjà proposé de prévoir, à l'avant de l'avion, un empennage canard. Des avions à empennage canard sont par exemple décrits dans les brevets français FR-A-1 032 665 et FR-A-2 473 466 ou dans la revue FLIGHT INTERNATIONAL, du 23 juillet 1988, pages 22 et suivantes.

Pour produire un moment équivalant à un empennage arrière déportant, un tel empennage canard engendre une portance qui contribue à la portance globale de l'avion, de sorte que la voilure principale peut être moins importante qu'elle ne le serait sans empennage canard et il en résulte une réduction de masse et de traînée. Ainsi, l'addition d'un empennage canard avant permet :

- soit de réduire la voilure principale d'un avion, pour un fuselage donné ;
- soit d'agrandir le fuselage d'un avion, sans avoir à augmenter la voilure principale dudit avion.

Il apparaît donc, à première vue, que la disposition d'un empennage canard à l'avant d'un avion présente de nombreux avantages.

En réalité, ces avantages ne peuvent être exploités pleinement car, de façon connue, un empennage canard entraîne l'avancée du foyer de la portance de la voilure principale, l'amplitude de cette avancée étant fonction de la valeur du gradient de portance et du bras de levier de l'empennage canard. Il en résulte que, lorsque l'avion rencontre des rafales de vent et que la valeur de la portance de l'empennage canard varie dans de larges limites, l'avancée du point d'application du surcroît de portance de la voilure principale varie également fortement, ce qui entraîne l'instabilité de l'avion.

Pour éviter qu'un tel déséquilibre ne rende l'avion incontrôlable, il est donc nécessaire que l'empennage canard soit suffisamment petit pour que sa portance ne puisse prendre que des valeurs non susceptibles d'être dangereuses pour la stabilité de l'avion. Mais alors, il est impossible d'optimiser la traînée globale de l'avion.

De plus, pour ne pas accroître encore les risques de déséquilibre de l'avion, il est alors nécessaire de maintenir le centrage de l'avion dans des limites étroites.

Ainsi, l'empennage canard déstabilise l'avion et doit donc apporter une portance limitée non susceptible d'améliorer la traînée de l'avion de façon significative et il entraîne des contraintes de centrage qui ne semblent pas avoir été résolues par la technique antérieure.

A ce propos, il est caractéristique de constater que le brevet français FR-A-1 032 665 et la revue FLIGHT INTERNATIONAL, mentionnés ci-dessus, ne concernent respectivement qu'un avion de tourisme et un avion d'affaires, à empennage canard de petite taille (à calage d'incidence fixe pour le second), dans lesquels les déplacements du centre de gravité sont limités. En revanche, il semble que l'avion de transport du brevet français FR-A-2 473 466 ne puisse être pilotable notamment si l'on désire maintenir une plage de chargement correcte, c'est-à-dire permettre au centre de gravité de se déplacer dans une grande plage de variation le long de l'axe longitudinal de l'avion. En effet, il faudrait alors utiliser un empennage canard de grandes dimensions, ce qui augmenterait la masse de l'avion et imposerait des vitesses de décollage et d'atterrissage trop élevées. De plus, cet empennage canard important rendrait l'avion instable.

De ce qui précède, on voit donc que, dans un avion à empennage canard avant, il y a antinomie entre :

- augmentation de portance et réduction de traînée, d'une part ; et
- allégement structural, équilibrage, stabilité, performances et qualités de vol au décollage et à l'atterrissage, d'autre part.

De ce fait, comme cela est décrit pour l'avion de tourisme de la revue FLIGHT INTERNATIONAL, il est nécessaire de chercher un compromis tel que empennage canard de petite dimension et calé à angle fixe apportant un surcroît de portance et une réduction de traînée, non optimisé mais ne risquant pas d'entraîner une instabilité, ni d'augmenter les vitesses de décollage et d'atterrissage, le tout concernant un avion pour lequel le centrage varie très faiblement.

La présente invention a pour objet de remédier aux inconvénients précités et elle concerne un avion de transport qui présente, à la fois, les avantages suivants :

- une traînée optimisée, susceptible de conduire à une consommation de carburant réduite ;
- des performances et des qualités de vol améliorées aux basses vitesses (décollage et atterrissage) ;
- un allégement structural ; et
- une grande souplesse opérationnelle (faible sensibilité au centrage du chargement, bonne manoeuvrabilité, augmentation des plafonds de vol).

A cette fin, selon l'invention, l'avion comportant une voilure principale, des surfaces aérodynamiques de profondeur et un empennage canard avant dont les plans sont réglables en orientation angulaire autour d'un axe transversal à l'axe longitudinal dudit avion, sous l'action d'organes d'actionnement, est remarquable en ce qu'il comporte :

- des moyens de calcul recevant en continu au moins des mesures

    . de la vitesse de l'avion par rapport à l'air,
    . du centrage de l'avion,
    . de l'altitude de vol, et
    . de la masse dudit avion

  et calculant le calage angulaire à donner auxdits plans de l'empennage canard, pendant des phases de vol stabilisé (montée, palier, descente) sans perturbations atmosphériques pour que la portance dudit empennage canard corresponde à chaque instant à la valeur la plus faible possible de la traînée de l'avion, lesdits moyens de calcul commandant lesdits organes d'actionnement pour qu'ils actionnent en conséquence lesdits plans de l'empennage canard ; et
- des moyens conférant audit empennage canard une portance au moins sensiblement constante lorsque l'avion en vol n'est pas dans une phase de vol stabilisé sans perturbations atmosphériques.

Ainsi, pendant les phases de vol stabilisé (montée, palier, descente) sans perturbations atmosphériques, la traînée est minimale à chaque instant et il en est de même de la consommation de carburant. Dans tous les autres cas de vol, c'est-à-dire avec perturbations atmosphériques ou en manoeuvres, la portance de l'empennage canard est constante, de sorte qu'il n'y a plus aucun risque d'instabilité. Il est alors possible de conférer à l'avion conforme à la présente invention des performances améliorées et des qualités de vol correspondant à celles du même avion, non muni d'empennage canard, tout en bénéficiant d'une large plage de centrage.

Selon un premier mode de réalisation, lesdits moyens conférant à l'empennage canard une portance au moins sensiblement constante rendent ledit empennage canard flottant, lui permettant de s'orienter librement dans le vent.

En variante, lesdits moyens conférant à l'empennage canard une portance au moins sensiblement constante comportent des moyens de calcul ayant en mémoire le gradient de portance dudit empennage canard et recevant en continu des mesures

- de l'incidence des plans canard,
- de la vitesse de tangage de l'avion,
- de la vitesse prévisionnelle de la vitesse de l'avion par rapport à l'air, en avant de l'avion

et calculant le calage angulaire à donner auxdits plans de l'empennage canard, lorsque l'avion en vol n'est pas dans une phase de vol stabilisé sans perturbations atmosphériques, pour que la portance dudit empennage canard soit au moins sensiblement constante, lesdits moyens de calcul commandant en conséquence lesdits plans de l'empennage canard.

Dans ce dernier cas, lesdits moyens de calcul peuvent commander lesdits plans de l'empennage canard par l'intermédiaire desdits organes d'actionnement.

Il est toutefois avantageux que lesdits plans canard soient pourvus de gouvernes de bord de fuite réglables en orientation angulaire autour d'axes sous l'action d'autres organes d'actionnement et que lesdits moyens de calcul commandent lesdites gouvernes de l'empennage canard par l'intermédiaire desdits autres organes d'actionnement.

De préférence, lesdites surfaces aérodynamiques de profondeur sont formées par un empennage stabilisateur horizontal arrière dont les plans sont réglables en orientation angulaire autour d'un axe transversal à l'axe longitudinal dudit avion et lesdits moyens de calcul commandent de plus, pendant les phases de vol stabilisé sans perturbations atmosphériques, l'orientation desdits plans de l'empennage horizontal arrière pour que, à chaque instant, le triplet des valeurs de la portance de la voilure principale, de la portance dudit empennage canard et de la portance dudit empennage horizontal arrière corresponde à la valeur la plus faible possible de la traînée de l'avion.

Les figures du dessin annexé feront bien comprendre comment l'invention peut être réalisée. Sur ces figures, des références identiques désignent des éléments semblables.

La figure 1 est une vue en perspective d'un avion de transport à empennage canard conforme à l'invention.

La figure 2 est une vue schématique d'un premier mode de réalisation de la présente invention.

La figure 3 illustre schématiquement le système des forces appliquées en vol à l'avion de l'invention.

Les figures 4A et 4B sont des diagrammes illustrant la variation du calage angulaire de l'empennage canard pendant une phase de vol en palier stabilisé sans perturbations atmosphériques, ainsi que pendant de telles phases de vol correspondant à des paliers d'altitudes différentes.

Les figures 5 et 6 sont des schémas de variantes de réalisation de l'invention.

La figure 7 illustre les variations du calage de l'empennage stabilisateur arrière, réglable en orientation angulaire, en rapport avec les figures 4A et 4B.

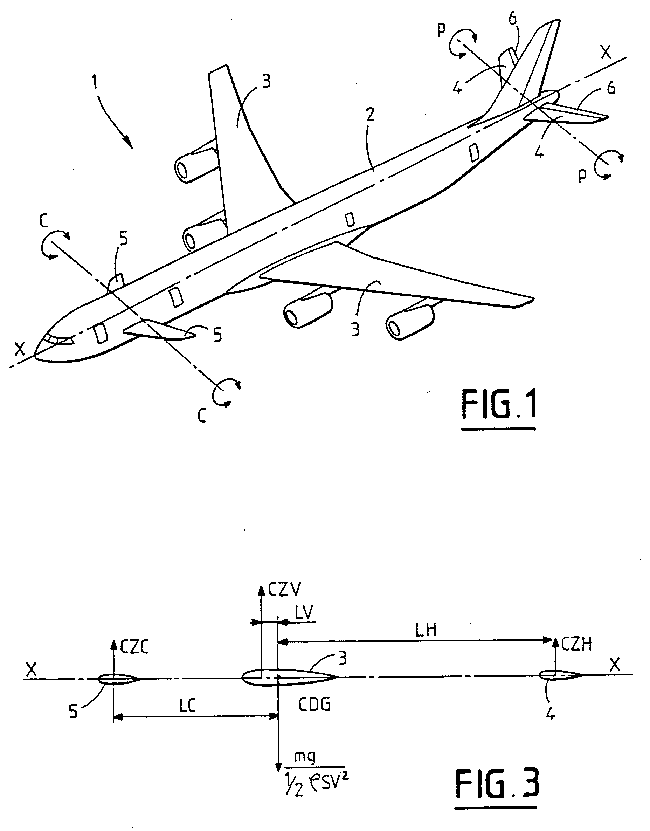

L'avion de transport 1, conforme à la présente invention et représenté sur la figure 1, comporte un fuselage 2 d'axe longitudinal X-X, fuselage auquel sont raccordés, entre autres, deux ailes 3 formant la voilure principale, un empennage arrière horizontal (4, 4) pourvu de deux plans stabilisateurs 4 et un empennage canard avant (5, 5) pourvu de deux plans canard 5. Les deux ailes 3, les deux plans stabilisateurs arrière 4 et les deux plans canard avant 5 sont, respectivement, symétriques l'un de l'autre par rapport à l'axe longitudinal X-X.

Les ailes 3 portent des volets, des ailerons, des becs, etc ... (non représentés), ainsi que des moteurs de propulsion (représentés, mais non référencés).

Chacun des plans stabilisateurs arrière 4 est pourvu d'une gouverne de profondeur 6 et peut éventuellement être réglé en orientation angulaire par rotation autour d'un axe transversal P-P, perpendiculaire à l'axe longitudinal X-X, lesdits plans stabilisateurs arrière 4 étant couplés en rotation.

Chacun des plans canard avant 5 peut être réglé en orientation angulaire par rotation autour d'un axe transversal C-C, perpendiculaire à l'axe longitudinal X-X.

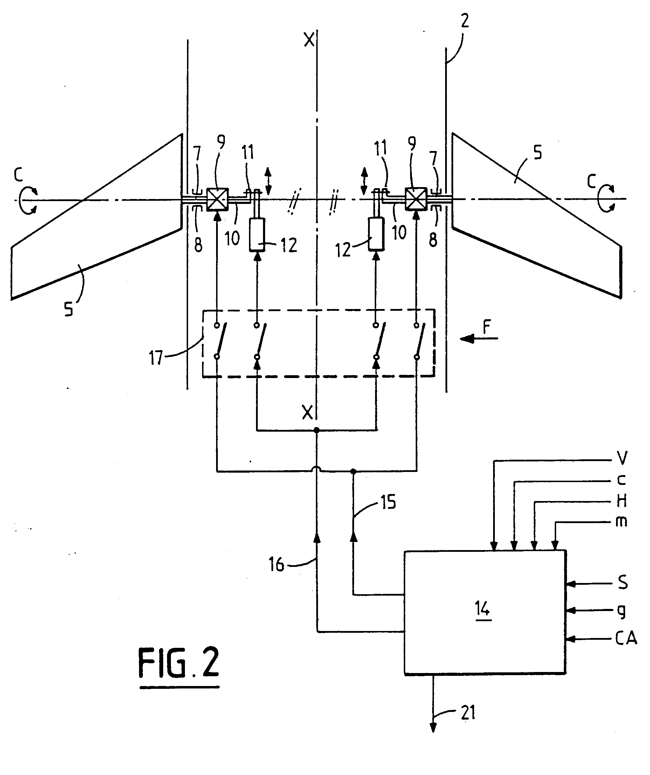

Dans les exemples de réalisation schématiques des figures 2, 5 et 6, chaque plan canard 5 est, à cet effet, solidaire d'un arbre 7 tourillonné librement dans des paliers 8 solidaires de l'avion 1.

Dans l'exemple particulier de la figure 2, chaque arbre 7 peut être accouplé, par un accouplement commandé 9, à un arbre 10, portant un maneton 11. Les manetons 11 sont articulés à des organes d'actionnement 12, par exemple des vérins.

Le dispositif de la figure 2 comporte de plus un calculateur 14, monté à bord de l'avion 1, susceptible de commander en synchronisme les deux accouplements 9 et les deux organes d'actionnement 12, respectivement par l'intermédiaire de liaisons 15 et 16 et d'un interrupteur de commande 17.

Le calculateur 14 comporte en mémoire les caractéristiques aérodynamiques CA des plans canard 5, la surface de référence S de l'avion 1, l'accélération $g$ de la pesanteur, ainsi que les abscisses le long de l'axe X-X des points d'application de la portance des ailes 3, de la portance des plans stabilisateurs arrière 4 et de la portance des plans canard avant 5. De plus, le calculateur 14 reçoit à titre de paramètres :

- la vitesse instantanée V de l'avion 1, par exemple calculée par le système ADIRS (Air Data Inertial Reference System) de l'avion (non représenté)
- le centrage $c$ de l'avion, c'est-à-dire la position du centre de gravité CDG de celui-ci le long de l'axe longitudinal X-X. Le centrage $c$ peut provenir d'un système tel que celui décrit dans les brevets américains US-A-4 937 754 et US-A-4 949 269 ou bien de la mise en oeuvre de la méthode connue consistant à peser l'avion au sol, à mesurer les quantités de carburant dans les divers réservoirs, à mesurer ou estimer les chargements en passagers et en fret et à sommer ces données sur un abaque de masse et centrage, puis à reporter chacune de ces données en permanence sur ledit abaque pour suivre l'évolution de la position du centre de gravité. Dans ce dernier cas, les diverses opérations sont effectuées soit manuellement, soit à l'aide d'un calculateur qui prend en compte les données de départ et reporte en permanence au cours du vol les variations de masse dues à la diminution et au transfert de carburant ;
- l'altitude H de l'avion, délivrée de façon connue par un altimètre ou des sondes altimétriques (non représentés) ; et
- la masse $m$ de l'avion, par exemple calculée par le système FMS (Flight Management System) de l'avion (non représenté) ou estimée en continu à partir d'une pesée au sol, comme expliqué ci-dessus à propos du centrage $c$.

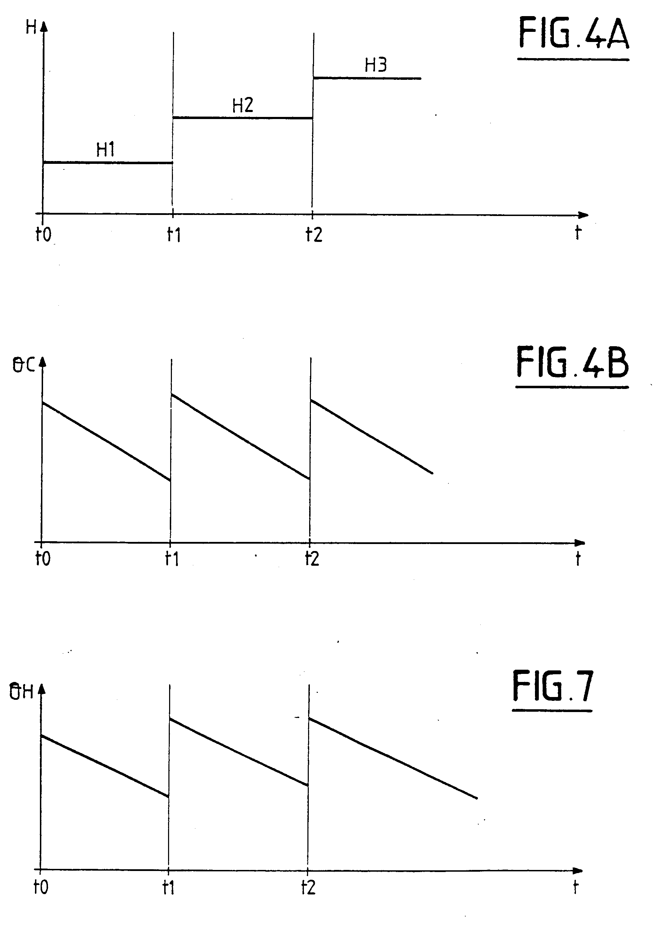

Sur le schéma de la figure 3, on a représenté les différentes forces appliquées à l'avion 1 en vol. Il s'agit de :

- la portance principale CZV engendrée par la voilure principale 3,3 ;
- la portance CZH engendrée par les plans stabilisateurs arrière 4,4 ;
- la portance CZC engendrée par les plans canard avant 5,5 ; et
- le poids $\underline{mg}$ de l'avion, divisé par la pression cinétique ½ $\rho SV^2$ et appliqué au centre de gravité CDG de l'avion 1, avec $\underline{m}$ = masse de l'avion, $\underline{g}$ = accélération de la pesanteur, $\rho$ = masse volumique de l'air, S = surface de référence de l'avion 1 et V = vitesse instantanée de l'avion 1 par rapport à l'air.

La sustentation de l'avion 1 en vol exige que

$$CZV + CZH + CZC = mg/½\, \rho\, SV^2, \tag{1}$$

tandis que l'équilibrage en tangage dudit avion nécessite que

$$CZV \times LV + CZH \times LH + CZC \times LC = 0 \tag{2}$$

en appelant LV, LH et LC respectivement les distances (ou bras de levier) séparant, du centre de gravité CDG de l'avion, les points d'application de la portance CZV des ailes 3, de la portance CZH des plans stabilisateurs 4 et de la portance CZC des plans canard 5.

On voit ainsi que, pour assurer les deux contraintes qui sont la sustentation et l'équilibrage, il existe trois paramètres, à savoir la portance principale CZV, la portance CZH de l'empennage arrière et la portance CZC de l'empennage canard. Il est donc possible d'assurer la meilleure traînée pour l'avion 1, pour une portance globale équilibrée donnée, en optimisant l'ensemble des trois portances CZV, CZH et CZC. Cela conduit à minimiser la traînée globale de l'avion 1 en déchargeant les ailes 3 par les empennages 4 et/ou 5.

En effet, on sait que, au moins en première approximation, la traînée globale RX de l'avion 1 peut s'écrire sous la forme

$$RX = RXO + ½\, \rho\, SV^2\, [A.CZV^2 + B.CZH^2 + C.CZC^2 + D.CZV.CZH + E.CZV.CZC + F.CZH.CZC] \tag{3}$$

expression dans laquelle RXO et A, B, C, D, E et F sont des constantes, fonctions de la configuration géométrique de l'avion 1.

Il est donc possible de respecter les équations (1) et (2) de sustentation et d'équilibre en minimisant la traînée RX, par ajustement de la portance CZC de l'empennage canard 5 (et éventuellement de la portance CZH de l'empennage stabilisateur 4, comme on le verra ci-après).

Compte tenu des commentaires précédents, le fonctionnement du dispositif de la figure 2 est le suivant.

I - Lorsque l'avion 1 est en manoeuvre et/ou qu'il traverse des perturbations atmosphériques, l'interrupteur de commande 17 est ouvert (position représentée sur la figure 2), de sorte que ni les accouplements 9, ni les organes d'actionnement 12 sont commandés par le calculateur 14. Les arbres 7 sont libres de tourner dans leurs paliers 8. Par suite, les plans canard avant 5 sont flottants et s'orientent spontanément et librement dans le vent en pivotant autour de l'axe C-C, de façon que leur moment par rapport audit axe soit nul. L'empennage canard engendre donc une portance CZC de valeur constante qui ne peut déstabiliser l'avion 1, puisque le gradient de portance dudit empennage canard est nul.

II - Lorsque l'avion 1 est en vol stabilisé (par exemple en palier à altitude H constante) et qu'il n'existe pas de perturbations atmosphériques, l'interrupteur de commande 17 passe, manuellement ou automatiquement, de sa position ouverte à sa position fermée (flèche F). Il en résulte alors que la liaison 15 commande les accouplements 9 de façon que ceux-ci accouplent les arbres 7 et les arbres 10, qui deviennent solidaires en rotation autour de l'axe C-C. Par ailleurs, les organes d'actionnement 12 sont commandés par le calculateur 14, à travers la liaison 16.

Dans ce cas, à partir des paramètres V, c, H, m, CA, $\rho$ et g, le calculateur 14 calcule la valeur du calage $\Theta C$ des plans canard 5 (position angulaire $\Theta C$ desdits plans autour de l'axe C-C) qui correspond à la valeur de la portance CZC de l'empennage canard donnant la traînée RX la plus faible. Pour cela, le calculateur 14 met en oeuvre les équations (1), (2) et (3) ci-dessus, compte-tenu du fait que l'altitude H est représentative de la masse volumique $\rho$ de l'air et que le centrage permet de définir les distances LV, LM et LC.

Cette valeur de calage $\Theta C$ des plans canard 5 est imposée par le calculateur 14, grâce à l'action des organes d'actionnement 12 qui, en tirant ou en poussant les manetons 11, font tourner les arbres 10 et donc les arbres 8 qui leur sont accouplés, grâce aux accouplements 9.

Ainsi, à tout instant d'un tel vol stabilisé, il est possible de minimiser la traînée de l'avion 1 et donc sa consommation de carburant.

On remarquera que, au cours d'un palier, puisque la masse m diminue dans le temps du fait de la consommation de carburant et que les autres paramètres sont supposés constants, la portance globale de l'avion décroît, de sorte que la portance CZC de l'empennage canard doit décroître. Il en est donc de même du calage angulaire ⊙C dudit empennage canard.

Au cours de la croisière, le pilote peut, du fait de la diminution de masse de l'avion 1, effectuer un ou plusieurs changements de palier d'altitude supérieure, dans le but d'optimiser la consommation de carburant.

Lors d'un tel changement de palier, puisque l'altitude augmente et que les autres paramètres restent à peu près constants, la portance peut rester constante, mais le coefficient de portance de l'avion augmente, puisque la masse volumique de l'air ρ diminue. Le calage de l'empennage canard 5, 5 devra donc être augmenté.

Sur les figures 4A et 4B, on a illustré un exemple de croisière de ce type en fonction du temps t. Entre les instants to et t1, l'avion 1 vole en palier stabilisé à une altitude H égale à H1, puis à l'instant t1 l'avion passe à un palier stabilisé d'altitude H2 supérieure à H1, puis à l'instant t2 à un palier stabilisé d'altitude H3 supérieure à H2, etc ... (figure 4A). La figure 4B illustre que, pendant chaque palier stabilisé d'altitude H1, H2, H3, etc ..., le calage ⊙C de l'empennage canard décroît, mais que ledit calage croît, lorsque l'avion passe d'un palier à un palier supérieur.

Pendant les manoeuvres permettant le passage d'un palier à un autre, l'interrupteur de commande 17 est ouvert pour que les plans canard 5 flottent aérodynamiquement.

Bien entendu, si, au cours de la croisière, le centrage c ou la vitesse V variait, le calage ⊙C évoluerait afin d'assurer à tout instant l'optimisation de la traînée.

III - Si, lorsque l'avion 1 est en vol stabilisé sur un palier H1, H2, H3, etc ... apparaît une perturbation atmosphérique, telle qu'une rafale, l'interrupteur de commande 17 est ouvert manuellement ou automatiquement (sens inverse de la flèche F) pour rendre flottants les plans canard 5 et éviter le déséquilibre de l'avion 1. Cette commande déclenche une phase transitoire dans laquelle la portance de l'empennage canard 5, 5 tend vers la portance d'équilibre à moment nul. Il en résulte un changement rapide de la répartition des portances, qui doit être contré par l'empennage arrière 4, 4. Cet inconvénient peut être corrigé par la variante de réalisation ci-après.

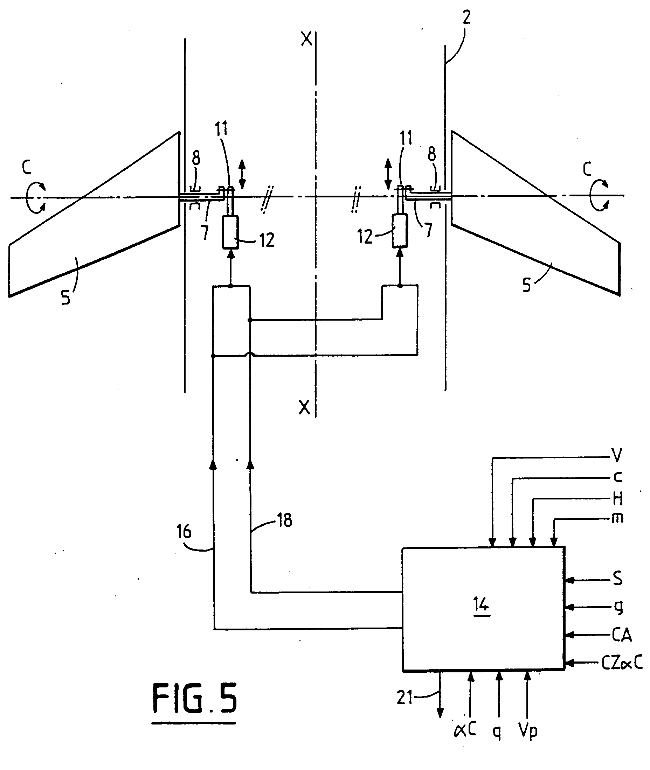

La variante de réalisation de l'invention, illustrée schématiquement par la figure 5, permet le pilotage en continu du calage des plans 5 de l'empennage canard, même pendant les manoeuvres et les rafales. Par rapport à la réalisation de la figure 2 :

- on retrouve les arbres 7, les paliers 8, les manetons 11, les organes d'actionnement 12, le calculateur 14 et la ligne 16 de commande des organes d'actionnement 12, en vol en palier ;
- les accouplements 9 et les arbres 10 ont été supprimés et les manetons 11 sont directement solidaires des arbres 7 ;
- en plus des informations V, c, H, m, S, g et CA, le calculateur 14 comporte en mémoire le gradient de portance CZαC de l'empennage canard 5, 5, qui est une constante caractéristique de celui-ci et qui est déterminé, par exemple, par des essais en vol ou en soufflerie et ledit calculateur 14 reçoit :

    . la mesure de l'incidence αC des plans canard 5, délivrée par exemple par une sonde d'incidence (non représentée)
    . la mesure de la vitesse de tangage q de l'avion, délivrée par exemple par la centrale inertielle de celui-ci (non représentée) ; et
    . la mesure prévisionnelle Vp de la vitesse de l'avion par rapport à l'air, en avant de l'avion, par exemple délivrée par un dispositif de vélocimétrie laser (non représenté)

- le calculateur 14 calcule la quantité

$$Q = CZ\alpha C \ (\alpha C - q/Vp \times LC) \tag{4}$$

qui représente la portance CZC de l'empennage canard 5, 5, et il détermine ensuite la valeur I du calage ⊙C pour laquelle la quantité Q est constante ; et
- le calculateur 14 adresse, par l'intermédiaire de la liaison 18, cette valeur I de calage aux organes d'actionnement 12, de façon que ceux-ci modifient le calage de l'empennage canard afin que, pendant toute une manoeuvre ou pendant toute une perturbation atmosphérique, la portance CZC reste constante.

Ainsi, les plans canard 5 sont soumis à une double commande, à savoir :

- une première commande lente, de longue durée, assurant la meilleure aérodynamique possible à l'avion et concernant le vol de croisière en palier, comme cela a été décrit en regard du dispositif de la figure 2 ; et
- une seconde commande rapide, de courte durée, assurant une valeur constante à la portance de l'empennage canard, cette valeur constante n'étant certainement pas optimale en ce qui concerne la traînée de l'avion 1, mais évitant la déstabilisation de l'avion pendant une manoeuvre ou une rafale.

Pour l'exécution de cette seconde commande, on mesure donc (par exemple par le dispositif de vélocimétrie laser mentionné ci-dessus) les fluctuations de vitesse (en grandeur et direction) en avant de l'avion 1 à une distance suffisante pour donner au calculateur 14 le temps de réaliser le calcul de la quantité Q suivant l'équation (4) et d'imposer la valeur de calage I aux plans canard 5. Les mesures de ces fluctuations sont bien entendu séquentielles et la précision d'échantillonnage est suffisante pour reconstituer et prévoir la rafale ou la manoeuvre et pour que, à chaque instant de la manoeuvre ou de la traversée de la rafale, la valeur de calage I fournisse une valeur de la portance CZC aussi constante que possible.

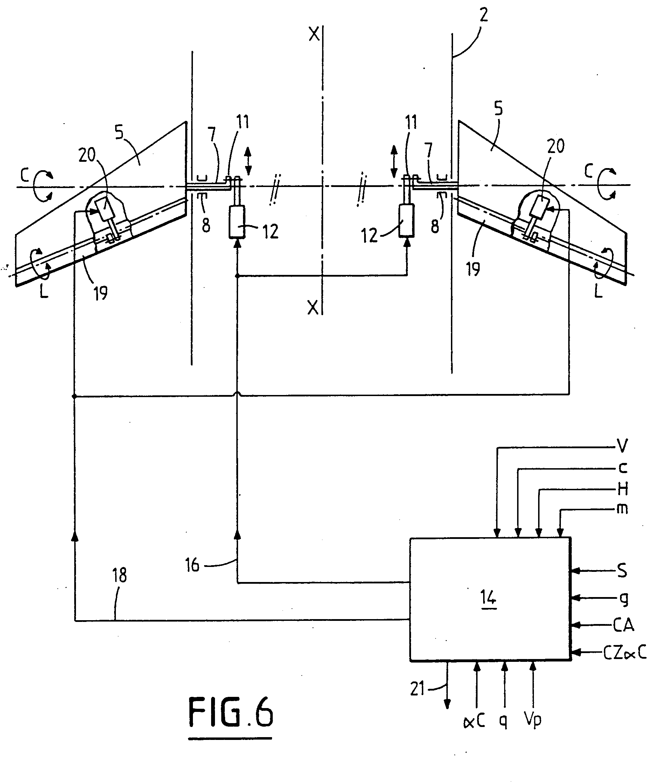

Dans la variante de réalisation de la figure 6, les plans canard 5 sont pourvus de gouvernes de bord de fuite 19, pouvant pivoter autour d'axes L-L, sous l'action d'organes d'actionnement 20. Dans ce cas, la liaison 16 commande (comme dans les modes de réalisation des figures 2 et 5) les organes d'actionnement 12, tandis que la liaison 18 commande les organes d'actionnement 20 (et non plus les organes d'actionnement 12, comme cela est représenté sur la figure 5).

Ainsi, la commande lente, de longue durée, est appliquée aux plans 5 eux-mêmes, tandis que la commande rapide, de courte durée, est appliquée aux gouvernes 19.

Si, comme cela est représenté sur la figure 1, l'empenage stabilisateur arrière 4, 4 est du type PHR, c'est-à-dire réglable en orientation angulaire autour d'un axe P-P transversal à l'axe longitudinal X-X, le calculateur 14 comporte une sortie 21 pour la commande du calage $\Theta$H dudit empennage stabilisateur arrière 4, 4 pendant les phases de vol de croisière en palier sans perturbations atmosphériques. Le calculateur 14 contrôle alors les organes d'actionnement spécifiques usuels (non représentés) prévus pour le réglage dudit empennage stabilisateur arrière.

En effet, comme il a déjà été mentionné ci-dessus à propos des équations (1) et (2), il existe trois paramètres de conduite du vol, à savoir les portances CZV, CZH et CZC, pour assurer les deux contraintes de sustentation et d'équilibrage en tangage représentées par lesdites équations (1) et (2). Il existe donc une infinité de triplets de valeurs de la portance CZV des ailes 3, de la portance CZH de l'empennage stabilisateur arrière 4, 4 et de la portance CZC de l'empennage canard avant 5, 5 pour satisfaire lesdites contraintes de sustentation et d'équilibrage en tangage.

En revanche, on peut montrer, comme expliqué précédemment, que l'on sait déterminer le seul triplet de valeurs de CZV, CZH et CZC permettant de minimiser la traînée et donc la consommation de croisière.

De façon semblable à ce qui a été décrit ci-dessus à propos de la portance CZC, la portance CZH de l'empennage stabilisateur arrière 4,4 est une fonction de la masse $\underline{m}$, du centrage c, de la vitesse V et de l'altitude H. Aussi, connaissant les caractéristiques aérodynamiques dudit empennage stabilisateur arrière, il est possible de déterminer, dans le calculateur 14, la valeur du calage $\Theta$H à donner aux plans 4 pour qu'ils engendrent la valeur de portance CZH associée aux valeurs correspondantes de portance CZV et CZC, permettant de minimiser la traînée.

Sur la figure 7, on a illustré schématiquement (par analogie avec la figure 4B) les variations du calage $\Theta$H dans le cas de vol représenté sur la figure 4A.

Bien que ci-dessus, en regard des figures 2, 5 et 6, on ait décrit des modes de réalisation dans lesquels les plans canard 5 sont couplés en orientation angulaire, il va de soi qu'un tel couplage n'est pas une obligation et que les commandes desdits plans canard 5 peuvent être individuelles.

Par ailleurs, bien que l'avion représenté sur la figure 1 soit du type subsonique, on comprendra aisément que la présente invention s'applique sans restriction aux avions de transport supersoniques. Dans ce cas, lesdites surfaces aérodynamiques de profondeur 4 sont des élevons du bord de fuite de la voilure principale.

## Revendications

1. Avion de transport (1) comportant une voilure principale (3), des surfaces aérodynamiques de profondeur (4) et un empennage canard avant dont les plans (5) sont réglables en orientation angulaire autour d'un axe (C-C) transversal à l'axe longitudinal (X-X) dudit avion (1), sous l'action d'organes d'actionnement (12), ledit avion (1) comportant de plus des moyens de calcul (14) qui reçoivent en continu des mesures de la vitesse (V) de l'avion par rapport à l'air et de l'altitude de vol (H) et qui calculent le calage angulaire à donner auxdits plans (5) de l'empennage canard, pour que la portance dudit empennage canard corresponde à chaque instant à la valeur la plus faible possible de la traînée de l'avion, lesdits moyens de calcul commandant lesdits organes d'actionnement (12) pour qu'ils actionnent en conséquence lesdits plans (5) de l'empennage canard, caractérisé en ce que :

- lesdits moyens de calcul (14) reçoivent de plus en continu au moins des mesures :

  . du centrage (c) de l'avion (1), et
  . de la masse (m) dudit avion,

  et appliquent, auxdits plans (5) de l'empennage canard, ledit calage angulaire calculé pendant des phases de vol stabilisé sans perturbations atmosphériques ; et
- des moyens (9 ; 12, 14, 18 ; 14, 18, 20) sont prévus pour conférer audit empennage canard une portance au moins sensiblement constante lorsque l'avion en vol n'est pas dans une phase de vol stabilisé sans perturbations atmosphériques.

2. Avion selon la revendication 1,
   caractérisé en ce que lesdits moyens (9) conférant à l'empennage canard (5,5) une portance au moins sensiblement constante rendent ledit empennage canard flottant, lui permettant de s'orienter librement dans le vent.

3. Avion selon la revendication 1,
   caractérisé en ce que lesdits moyens (12, 14, 18 ; 14, 18, 20) conférant à l'empennage canard (5,5) une portance au moins sensiblement constante comportent des moyens de calcul (14) ayant en mémoire le gradient de portance ($CZ\alpha C$) dudit empennage canard (5, 5) et recevant en continu des mesures

   - de l'incidence ($\alpha C$) des plans canard (5),
   - de la vitesse de tangage (q) de l'avion,
   - de la vitesse prévisionnelle (Vp) de la vitesse de l'avion (1) par rapport à l'air, en avant de l'avion

   et calculant le calage angulaire à donner auxdits plans (5) de l'empennage canard, lorsque l'avion n'est pas dans une phase de vol stabilisé sans perturbations atmosphériques, pour que la portance dudit empennage canard soit au moins sensiblement constante, lesdits moyens de calcul (14) commandant en conséquence lesdits plans (5) de l'empennage canard.

4. Avion selon la revendication 3,
   caractérisé en ce que lesdits moyens de calcul (14) commandent lesdits plans (5) de l'empennage canard par l'intermédiaire desdits organes d'actionnement (12).

5. Avion selon la revendication 3,
   caractérisé en ce que lesdits plans canard (5) sont pourvus de gouvernes de bord de fuite (19) réglables en orientation angulaire autour d'axes (L-L) sous l'action d'autres organes d'actionnement (20) et en ce que lesdits moyens de calcul (14) commandent lesdites gouvernes (19) de l'empennage canard par l'intermédiaire desdits autres organes d'actionnement (20).

6. Avion selon l'une quelconque des revendications 1 à 5, dans lequel lesdites surfaces aérodynamiques de profondeur sont formées par un empennage stabilisateur horizontal arrière dont les plans (4) sont réglables en orientation angulaire autour d'un axe (P-P) transversal à l'axe longitudinal (X-X) dudit avion (1),
   caractérisé en ce que lesdits moyens de calcul (14) commandent de plus, pendant les phases de vol stabilisé sans perturbations atmosphériques, l'orientation desdits plans (4) de l'empennage horizontal arrière pour que, à chaque instant, le triplet des valeurs de la portance de la voilure principale (3, 3), de la portance dudit empennage canard (5, 5) et de la portance dudit empennage horizontal arrière (4, 4) corresponde à la valeur la plus faible possible de la traînée de l'avion.

7. Avion selon l'une quelconque des revendications 1 à 6,
   caractérisé en ce qu'il est du type supersonique et en ce que lesdites surfaces aérodynamiques de profondeur (4) sont des élevons du bord de fuite de la voilure principale (3, 3).

## Claims

1. Transport aeroplane (1) including a mainplane (3), elevator aerodynamic surfaces (4) and a front canard empennage the planes (5) of which are adjustable in angular orientation about an axis (C-C) transverse to the longitudinal axis (X-X) of said aeroplane (1) by the action of actuating members (12), said aeroplane (1) further including calculating means (14) which continuously receive measurements of the speed (V) of the aeroplane with respect to the air and of the flight altitude (H) and which calculate the angular setting to give said canard empennage planes (5), so that the lift of said canard empennage corresponds at every instant to the lowest possible value of the drag of the aeroplane, said calculating means controlling said actuating members (12) so that they actuate said planes (5) of the canard empennage as a consequence, characterized in that:

- said calculating means (14) furthermore continuously receive at least measurements:

    . of the centring (c) of the aeroplane (1), and
    . of the mass (m) of said aeroplane,

    and apply said calculated angular setting to said planes (5) of the canard empennage, during the phases of stabilized flight without atmospheric disturbances; and
- means (9; 12, 14, 18; 14, 18, 20) are provided to confer, on said canard empennage, a lift which is at least substantially constant when the aeroplane in flight is not in a phase of stabilized flight without atmospheric disturbances.

2.  Aeroplane according to Claim 1, characterized in that said means (9) conferring an at least substantially constant lift on the canard empennage (5, 5) render the canard empennage floating, which allows it to orient itself freely in the wind.

3.  Aeroplane according to Claim 1, characterized in that said means (12, 14, 18; 14, 18, 20) conferring an at least substantially constant lift on the canard empennage (5, 5) include calculating means (14) having in memory the lift gradient ($CZ\alpha C$) of said canard empennage (5, 5) and continuously receiving measurements

- of the incidence ($\alpha C$) of the canard planes (5),
- of the pitch rate (q) of the aeroplane,
- of the forecast speed (Vp) of the speed of the aeroplane (1) with respect to the air, in front of the aeroplane

    and calculating the angular setting to be given to said planes (5) of the canard empennage, when the aeroplane is not in a phase of stabilized flight without atmospheric disturbances, so that the lift of said canard empennage is at least substantially constant, said calculating means (14) controlling said planes (5) of the canard empennage as a consequence.

4.  Aeroplane according to Claim 3, characterized in that said calculating means (14) control said planes (5) of the canard empennage via said actuating members (12).

5.  Aeroplane according to Claim 3, characterized in that said canard planes (5) are provided with trailing edge control surfaces (19) which are adjustable in angular orientation about axes (L-L) by the action of other actuating members (20) and in that said calculating means (14) control said control surfaces (19) of the canard empennage via said other actuating members (20).

6.  Aeroplane according to any one of Claims 1 to 5, in which said elevator aerodynamic surfaces are formed by a rear horizontal stabilizer empennage the planes (4) of which are adjustable in angular orientation about an axis (P-P) transverse to the longitudinal axis (X-X) of said aeroplane (1), characterized in that said calculating means (14) moreover, during the phases of stabilized flight without atmospheric disturbances, control the orientation of said planes (4) of the rear horizontal empennage so that, at any moment, the triplet of the values of the lift of the mainplane (3, 3), of the lift of said canard empennage (5, 5) and of the lift of said rear horizontal empennage (4, 4) corresponds to the lowest possible value of the drag of the aeroplane.

7.  Aeroplane according to any one of Claims 1 to 6, characterized in that it is of the supersonic type and in that said elevator aerodynamic surfaces (4) are trailing-edge elevons of the mainplane (3, 3).

**Patentansprüche**

1.  Transportflugzeug (1) mit einem Haupttragwerk (3), aerodynamisch wirksamen Höhenleitwerksflächen (4) und einem Vorderhöhenleitwerk, dessen Flächen (5) winklig um eine Achse (C-C) quer zur Längsachse (X-X) des Flugzeugs (1) durch Betätigungsorgane (12) verstellt werden können, wobei das Flugzeug (1) außerdem Rechenmittel (14) hat, an die kontinuierlich Messungen der Geschwindigkeit (V) des Flugzeugs gegenüber der Luft und der Flughöhe (H) gelangen und die die Winkelstellung der Flächen (5) des Vorderhöhenleitwerks errechnen, damit der Auftrieb des Vorderhöhenleitwerks jederzeit dem kleinstmöglichen Wert der Luftwiderstands des Flugzeugs entspricht, wobei die Rechenmittel die Betätigungsorgane (12) steuern, damit diese die Flächen (5) des Vorderhöhenleitwerks entsprechend steuern,
dadurch gekennzeichnet, daß:

- die Rechenmittel (14) außerdem kontinuierlich mindestens Messungen:

  . des Mittelpunkts (c) des Flugzeugs (1) und
  . der Masse (m) des Flugzeugs

  erhalten und an die Flächen (5) des Vorderhöhenleitwerks die in stabilisierten Flugphasen ohne atmosphärische Störungen errechneten winkelstellung anlegen; und
- Mittel (9; 12, 14, 18; 14, 18, 20) vorgesehen sind, um dem Vorderhöhenleitwerk einen zumindest annähernd konstanten Auftrieb zu verleihen, wenn sich das Flugzeug während des Fluges nicht in einer stabilisierten Flugphase ohne atmosphärische Störungen befindet.

2.  Flugzeug nach Anspruch 1,
    dadurch gekennzeichnet, daß die Mittel (9), durch die dem Vorderhöhenleitwerk (5, 5) ein zumindest annähernd konstanter Auftrieb verliehen wird, das Vorderhöhenleitwerk lösen, so daß es sich frei im Wind ausrichten kann.

3.  Flugzeug nach Anspruch 1,
    dadurch gekennzeichnet, daß die Mittel (12, 14, 18; 14, 18, 20), die dem Vorderhöhenleitwerk (5, 5) einen zumindest annähernd konstanten Auftrieb verleihen, Rechenmittel (14) mit dem gespeicherten Auftriebskoeffizienten ($CZ\alpha C$) des Vorderhöhenleitwerks (5, 5) haben, an die kontinuierlich Messungen

    - des Anstellwinkels ($\alpha C$) des Kopfleitwerks (5),
    - der Nickgeschwindigkeit (q) des Flugzeugs,
    - der voraussichtlichen Geschwindigkeit (Vp) der Geschwindigkeit des Flugzeugs (1) gegenüber der Luft vor dem Flugzeug

    gelangen und die Winkelstellung der Flächen (5) des Vorderhöhenleitwerks errechnen, wenn sich das Flugzeug nicht in einer stabilisierten Flugphase ohne atmosphärische Störungen befindet, damit der Auftrieb des Vorderhöhenleitwerks zumindest annähernd konstant ist, wobei die Rechenmittel (14) die Flächen (5) des Vorderhöhenleitwerks entsprechend steuern.

4.  Flugzeug nach Anspruch 3,
    dadurch gekennzeichnet, daß die Rechenmittel (14) die Flächen (5) des Vorderhöhenleitwerks über Betätigungsorgane (12) steuern.

5.  Flugzeug nach Anspruch 3,
    dadurch gekennzeichnet, daß die Flächen des Vorderhöhenleitwerks (5) Hinterkantenruder (19) haben, die unter der Wirkung anderer Betätigungsorgane (20) winklig um Achsen (L-L) verstellbar sind, und daß die Rechenmittel (14) die Ruder (19) des Vorderhöhenleitwerks über die anderen Betätigungsorgane (20) verstellen.

6.  Flugzeug nach einem der Ansprüche 1 bis 5,
    bei dem die aerodynamisch wirksamen Höhenleitwerksflächen aus einem hinteren Höhenstabilisator bestehen, dessen Flächen (4) winklig um eine Achse (P-P) quer zur Längsachse (X-X) des Flugzeugs (1) verstellbar sind, dadurch gekennzeichnet, daß die Rechenmittel (14) außerdem während der stabilisierten Flugphasen ohne atmosphärische Störungen die Ausrichtung der Flächen (4) des hinteren Höhenleitwerks steuern, damit der Tripelwert aus Auftrieb des Haupttragwerks (3, 3), Auftrieb des Vorderhöhenleitwerks (5, 5) und Auftrieb des hinteren Höhenleitwerks (4, 4) jederzeit dem kleinstmöglichen Wert des Luftwiderstandes des Flugzeugs entspricht.

7.  Flugzeug nach einem der Ansprüche 1 bis 6,
    dadurch gekennzeichnet, daß es sich dabei um ein Überschallflugzeug handelt und daß die aerodynamisch wirksamen Höhenleitwerksflächen (4) Hinterkantenelevons des Haupttragwerks (3, 3) sind.

FIG.1

FIG.3

11

**FIG.2**

# FIG.4A

# FIG.4B

# FIG.7

FIG.5

# FIG.6